Europäisches Patentamt

**European Patent Office**

**Office européen des brevets**

(11) Publication number: **0 037 599**
**A2**

# EUROPEAN PATENT APPLICATION

(21) Application number: **81200272.3**

(22) Date of filing: **10.03.81**

(51) Int. Cl.³: **B 60 R 9/06**

(30) Priority: **10.03.80 NL 8001426**

(43) Date of publication of application:
**14.10.81 Bulletin 81/41**

(84) Designated Contracting States:
**AT BE CH DE FR GB IT LI LU NL SE**

(71) Applicant: **Bulten-Lucas, Jenny Catharina**
**Nijverheidsweg 3-5**
**NL-7021 BK Zelhem(NL)**

(72) Inventor: **Bulten, Frederik Hendrik**

**deceased(NL)**

(74) Representative: **van der Beek, George Frans, Ir. et al,**
**Nederlandsch Octrooibureau P.O. Box 29720**
**NL-2502 LS The Hague(NL)**

(54) **Single point luggage carrier for a car.**

(57) Luggage carrier for a vehicle provided with means for the attachment of the carrier to the ball of the draw-hook of the towbar with which the vehicle is equipped, which means comprise a sleeve having an inner diameter which substantially equals the diameter of the ball (3a), a slot (5c) being provided in the wall of said sleeve (5), which extends from its free end and which slot is arranged to straddle the towbar (3), a clamping bracket (4, 6) adapted for being clamped around the towbar (3), to which clamping bracket a sliding plate (4a) having a slotted hole is fixed and a supporting sleeve (8a) to which two lip portions (8) are fixed which lip portions (8) extend in spaced apart parallel relation and between which lip portions (8) said sliding plate (8a) can be secured by means of securing means extending through holes formed in said lip portions (8) and through the slotted hole in said sliding plate (4a), the sleeve (5) of the retaining means being adapted to engage with its inner surface the outer surface of said supporting sleeve (8a), the slot (5c) in the sleeve (5) engaging said lip portions (8).

Fig. 1

EP 0 037 599 A2

Single point luggage carrier for a car.

The invention relates to a luggage carrier adapted  for being arranged to and on the ball of a draw-hook so that the carrier forms a dismountable unity with the vehicle.

The feature of this invention is that it is a single point  suspension to and on the ball of a draw-hook. Said draw-hook is normally used for the attachment of a trailer or caravan at the back of the car.

The disadvantages of carrying luggage on the already existing luggage carriers - roof carrier or baggage carrier - on a car are:

1. mostly sensitive to wind, what involves that the vehicle becomes somewhat more instable;

2. that the luggage in these cases always has to be lifted to a high level and mostly above the strength.

In the further description of this "single point luggage carrier for a car" the inventor uses in this patent application the short indication C-L-carrier.

The advantage and the object of carrying luggage on that C-L-carrier are:

1. carrying luggage which qua volume cannot be carried in the boot of a car, i.a. bicyles, cartons, cupboards, glas panels, etc. etc.;

2. that there is no need anymore to use a roof carrier or baggage carrier;

3. that one does not have to lift the luggage  to such a high level as with the last mentioned carriers;

4. that in carrying luggage, the sensitivity to wind is much less than with a roof carrier or baggage carrier, sothat this improves the stability of the vehicle.

The inventor states, that the only disadvantage of that C-L-carrier is, that in carrying luggage the carrying capacity depends on the type of car, in particular with respect to the springs and shock absorbers. However, this carrying capacity can be improved for cars of different types by reinforcing the springs and shock absorbers.

The invention will be elucidated with the help of the drawings in which by way of example some embodiments are shown.

Fig. 1 shows schematically in side elevation and back view a mounted C-L-carrier which is attached on the ball and to the towbar of the draw-hook.

Fig. 2 shows a section of the C-L-carrier in mounted condition, seen in the longitudinal direction of the car.

Fig. 3 shows an isometric projection of the retaining means to clarify fig. 2.

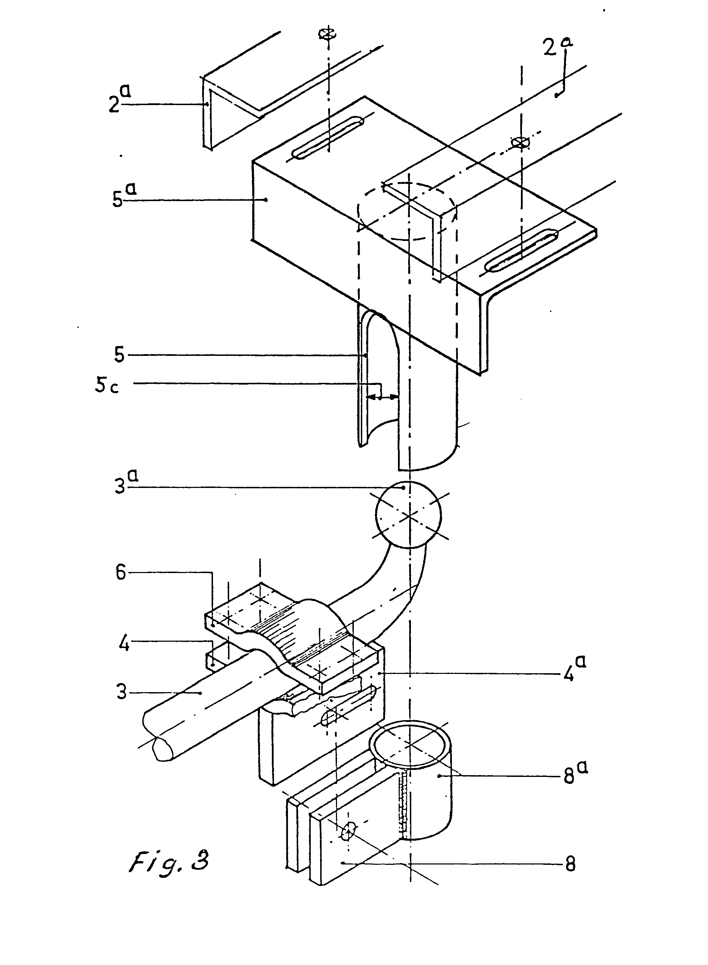

The C-L-carrier with fitting comprises an upstanding side 1 and a horizontal side 2. To lastmentioned side retaining means 5 is detachably connected. To said retaining means is welded an angle-section profile 5a having slotted holes which serve to mount the horizontal side 2 by means of two sliding angular irons 2a (see fig. 3) which are provided with two adjusting holes, sothat the horizontal side 2 and the upstanding side 1 can be adjusted in the longitudinal direction of the car.

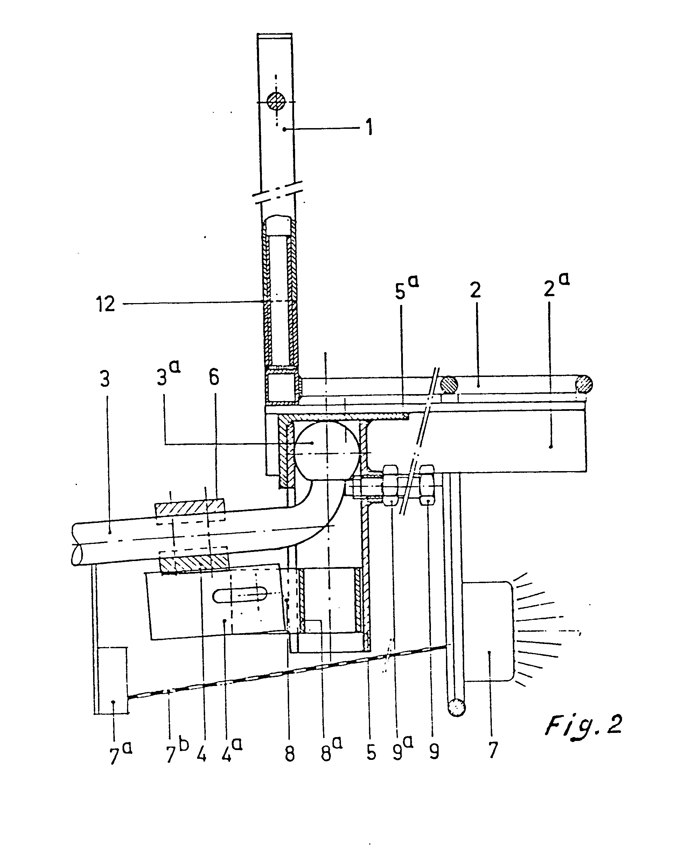

Retaining means 5 is further provided with a clamping bolt 9 which is disposed in a pivot sleeve 5b. Retaining means 5 is also provided with a slotted hole 5c (see fig. 2 and 3).

Retaining means 5 is pushed over the ball 3a of the towbar 3 by which the C-L-carrier is attached to the car.

However, in order to adjust the C-L-carrier as well as horizontally as vertically with respect to the road surface and to the vehicle, supporting means 4, 4a, 6, 8 and 8a are provided. Said supporting means serves also to stabilize the axial and radial forces on the C-L-carrier.

Supporting means 4, 4a, 6, 8 and 8a are fixed to the towbar 3 and comprise the following parts: a clamping bracket 4 and 6 to which a sliding plate 4a is welded. To said sliding plate 4a having a slot is fixed a supporting sleeve 8a having two lip portions 8.

In fig. 2 the above mentioned fitting is completely shown in mounted condition. Said fitting thereafter presents a very small clearance. However, this clearance is completely removed by tightening the clamping bolt 9 (see fig. 2). In order to prevent the complete C-L-carrier from getting loose by vibrations, said clamping bolt 9 is provided with a lock nut 9a.

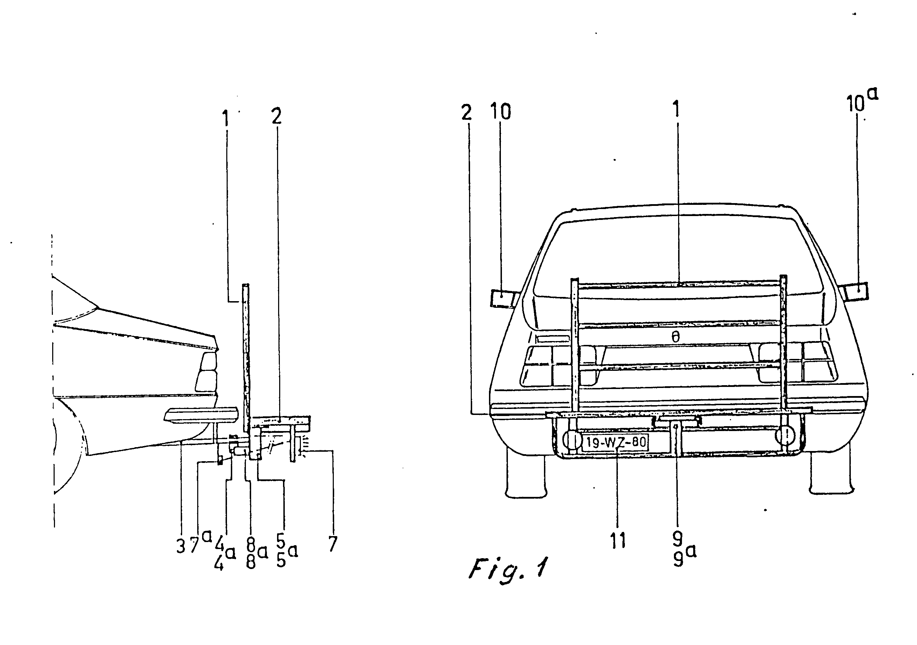

The C-L-carrier is further provided with a complete lighting installation 7 and 7a as shown in fig. 1. The two lamps 7 are connected through a five-core cable 7b with a plug socket 7a. This lighting installation is necessary because the C-L-carrier is mounted on the backside of the car and in carrying luggage, this luggage may blank out the rear lighting of the vehicle. Further the C-L-carrier is arranged so that a license plate can be mounted. This license plate 11 is at the left hand side of the horizontal side 2.

If luggage is carried on the C-L-carrier, which luggage is positioned on the carrier so that the view for the driver of the road behind him by means of the rear view mirror in the car is obstructed, the vehicle has to be provided with one or two outside mirrors 10 and 10a (see fig. 1). With the aid of these mirrors the driver has a good view from his seat of the road portions at the left and the right behind him.

The inventor aimes with the above described invention at a luggage carrier with fitting having the feature that said carrier can be mounted on each car which is provided with a draw-hook which normally is provided with a ball head having a cross section of plus minus 50 mm.

# C L A I M S

1. Luggage carrier for a car, characterized in that said carrier is mounted on the ball on the towbar of the draw-hook sothat a single point suspension is obtained.

2. Luggage carrier according to claim 1, characterized in that said carrier comprises three separate parts, viz.: a horizontal side   and an upstanding side    which can be taken apart, while on the horizontal side   , at its intermediate portion a retaining means   is provided by which the horizontal side and the upstanding side are permitted to be shifted in the longitudinal direction of the vehicle.

3. Luggage carrier according to claim 1 or 2, characterized in that by applying a supporting means, provided at the towbar of the draw-hook, said retaining means fitting over the ball of the draw-hook and over said supporting means, the whole forms a stability with the vehicle.

4. Luggage carrier according to claims 1, 2 or 3, characterized in that the horizontal side, at its rear side is provided with a complete lighting installation which consists of two lamps serving for as well as the rear lighting, the direction indicators as for the stop lights and license plate illumination.

1

2

3 7ᵃ 4ᵃ 8ᵃ 5ᵃ 7
4 8 5

2 10                    1                    10ᵃ

θ

19-WZ-80

11        9
9ᵃ

*Fig. 1*

½

0037599

Fig.2

**Fig. 3**